# EUROPÄISCHE PATENTSCHRIFT

(11) **EP 1 983 622 B1**
(45) Veröffentlichungstag und Bekanntmachung des Hinweises auf die Patenterteilung: **18.09.2013**
(21) Anmeldenummer: 08103459.7
(22) Anmeldetag: 09.04.2008
(51) Int. Cl.: H02B 1/20

(54) **Installationsverteiler mit Sammelschienenmodulen**
Installation distributer with busbar modules
Répartiteur d'installation doté de modules de barres omnibus

(30) Priorität: 20.04.2007 DE 102007018826
(43) Veröffentlichungstag der Anmeldung: 22.10.2008
(73) Patentinhaber: Siemens Aktiengesellschaft, 80333 München (DE)
(72) Erfinder: Albrecht, Christian, 93177 Altenthann (DE); Heil, Harald, 96117 Memmelsdorf (DE); Kleemeier, Manfred, 93073 Neutraubling (DE)

(56) Entgegenhaltungen:
- EP-A- 0 880 208
- EP-A- 1 003 258
- WO-A-2006/097127
- DE-A1- 3 420 250

## Beschreibung

Die vorliegende Erfindung betrifft einen Installationsverteiler mit mindestens einem Installationsgerät und einer Sammelschiene zum Übertragen von elektrischer Energie zu dem Installationsgerät.

Installationsverteiler dienen dazu, die Phase oder die Phasen eines elektrischen Versorgungsnetzes auf mehrere Leitungen oder Geräte aufzuteilen. Typischerweise besitzt ein derartiger Installationsverteiler zahlreiche Installationsgeräte wie Leitungsschutzschalter, Fehlerstromschutzschalter, Zähler und dgl.

Meist ist ein Installationsverteiler in Form eines Schranks realisiert, der mehrere Felder besitzt. So können beispielsweise in dem Verteilerschrank eines oder mehrere Zählerfelder sowie eines oder mehrere Schalterfelder für Leitungsschutzschalter bzw. Fehlerstromschutzschalter vorgesehen sein.

Üblicherweise werden in einem Installationsverteiler die Installationseinbaugeräte mit flexiblen Leitungen angeschlossen. Bei einer Vielzahl von eingebauten Geräten führen die Leitungen jedoch zu einer gewissen Unübersichtlichkeit, zu einer schlechten Zugänglichkeit sowie zu einem hohen Montageaufwand und einem großen Platzbedarf.

Für die Versorgung von Geräten, die auf einer gemeinsamen Hutschiene angeordnet sind, sind Sammelschienen bekannt. Diese Sammelschienen sind mit Hilfe von flexiblen Leitungen anzuschließen. Dazu sind die Leitungen abzulängen, abzuisolieren und gegebenenfalls in Kabelkanälen zu verlegen. Da Verteiler sehr kompakt gebaut sind, gestaltet sich die Verlegung von Leitungen, insbesondere bei größeren Querschnitten, schwierig und zeitaufwändig.

Aus der Druckschrift EP 0 938 175 A1 ist ein Installationsverteiler mit einem vertikalen Schienensystem und einem horizontalen Schienensystem bekannt. Dabei können Schaltkomponenten, die an einer horizontal angeordneten Hutschiene befestigt sind, mit einer dazu parallel verlaufenden Hilfsschiene des horizontalen Schienensystems verbunden werden.

Auch die Druckschrift DE 100 13 158 A1 zeigt eine Feldsammelschienenanordnung für einen Schaltschrank. Die einzelnen Stromzuführungselemente setzen sich aus einer Mehrzahl von einzelnen Feldsammelschienen zusammen, wobei sich die zu Stromführungselementen zusammengesetzten Feldsammelschienen im Wesentlichen über die gesamte Höhe des Schaltschranks erstrecken und parallel geschaltet sind. Vier Stromzuführungselemente in Form von Feldsammelschienen sind mit Hauptsammelschienen verbunden, welche horizontal verlaufen.

Darüber hinaus offenbart die Druckschrift DE 43 12 712 A1 eine Vorrichtung zur Stromübertragung von Sammelschienen auf im Winkel dazu verlaufende so genannte Winkel- oder Steckverteilschienen. Die Winkel- oder Steckverteilschienen verlaufen in einem Winkel von 90° zu einem Sammelschienenpaket, also üblicherweise in vertikaler Richtung.

Auch die Druckschrift US 4 316 234 zeigt ein Verteilersystem mit horizontalen und vertikalen Schienen. Sie stehen über Schraubverbindungen miteinander in Kontakt.

**Aus der Druckschrift** EP 0 880 208 A1 **ist ein gattungsgemäßer Installationsverteiler bekannt. Der Verteiler lässt sich aus mehreren Verdrahtungsmodulen aufbauen, die jeweils mehrere parallele Einzelschienen aufweisen. Insbesondere lassen sich mehrere parallel verlaufende Schienenmodule durch entsprechende quer verlaufende Module miteinander verbinden.**

Die Aufgabe der vorliegenden Erfindung besteht darin, einen Installationsverteiler bereitzustellen, der einfach und Platz sparend aufgebaut werden kann.

Erfindungsgemäß wird diese Aufgabe gelöst durch einen Installationsverteiler mit mindestens einem Installationsgerät und einer Sammelschiene zum Übertragen von elektrischer Energie zu dem Installationsgerät, wobei die Sammelschiene aus mehreren jeweils mindestens zwei parallele Einzelschienen aufweisenden Schienenmodulen aufgebaut ist, die mit Hilfe eines oder mehrere Verbindungsmodule zusammengesteckt sind. Der er**findungsgemäße Installationsverteiler ist als Schrank mit mehreren Wänden ausgebildet, wobei mindestens eines der mehreren Schienenmodule in eine der Wände integriert ist. Insbesondere kann die Wand, in die ein Schienenmodul integriert ist, eine Trennwand zwischen zwei Verteilerfeldern des Installationsverteilers sein. Somit können die Volumina der Feldtrennwände, die zur Abschottung der einzelnen Verteilerfelder benutzt werden, oder der Außenwände des Verteilerschranks in vorteilhafter Weise für Stromführungsaufgaben genutzt werden. Auf diese Weise lässt sich deutlich Raum einsparen.**

In vorteilhafter Weise lässt sich durch den modularen Aufbau mit Schienenmodulen, die parallele Einzelschienen aufweisen, ein Installationsverteiler mit individueller Konfiguration einfach aufbauen. Da die Schienen beliebig horizontal oder vertikal angeordnet werden können, können sämtliche Geräte in dem Verteiler in übersichtlicher Weise versorgt werden.

Bei einer speziellen Ausgestaltung des erfindungsgemäßen Installationsverteilers sind die Schienenmodule plattenförmig ausgebildet. Hierdurch sind die Module einfach zu montieren und die darin enthaltenen Einzelschienen leicht zugänglich.

Vorzugsweise besitzt jedes Schienenmodul je eine Einzelschiene für mindestens zwei der Leiter bzw. Phasen L1, L2, L3 und N. Gegebenenfalls kann jedes Schienenmodul auch eine Einzelschiene für einen Schutzleiter PE aufweisen. Damit kann den unterschiedlichsten Stromleitungssystemen wie Zweiphasensystem, Dreiphasensystem mit und ohne Schutzleiter Rechnung getragen werden.

Weiterhin können das/die Verbindungsmodule je eine flexible Leitung für jede Einzelschiene eines Schienenmoduls besitzen.

Somit lassen sich die Verbindungsmodule auch als Einspeise- oder Abgangsmodule nutzen.

Weiterhin ist es von Vorteil, wenn der Installationsverteiler horizontal nebeneinander mehrere gleich breite Verteilerfelder besitzt, wobei die Schienenmodule jeweils eine Länge aufweisen, die der Breite eines Verteilerfelds entspricht. Somit lässt sich ein gesamter Installationsverteiler ohne Konfektionierungsaufwand sehr rasch aufbauen.

Die vorliegende Erfindung wird nun anhand der beigefügten Zeichnungen näher erläutert, in denen zeigen:
- FIG 1: eine perspektivische Ansicht eines Verteilerschranks mit erfindungsgemäßen Schienenmodulen;
- FIG 2: ein Schienenmodul in der Draufsicht;
- FIG 3: das Schienenmodul von FIG 2 in der Längsseitenansicht;
- FIG 4: das Schienenmodul von FIG 2 in der Stirnseitenansicht;
- FIG 5: ein Verbindungsmodul entsprechend einer ersten Ausführungsform;
- FIG 6: ein Verbindungsmodul entsprechend einer zweiten Ausführungsform; und
- FIG 7: ein Einspeise- oder Abgangsmodul.

Das nachfolgend näher geschilderte Ausführungsbeispiel stellt eine bevorzugte Ausführungsform der vorliegenden Erfindung dar.

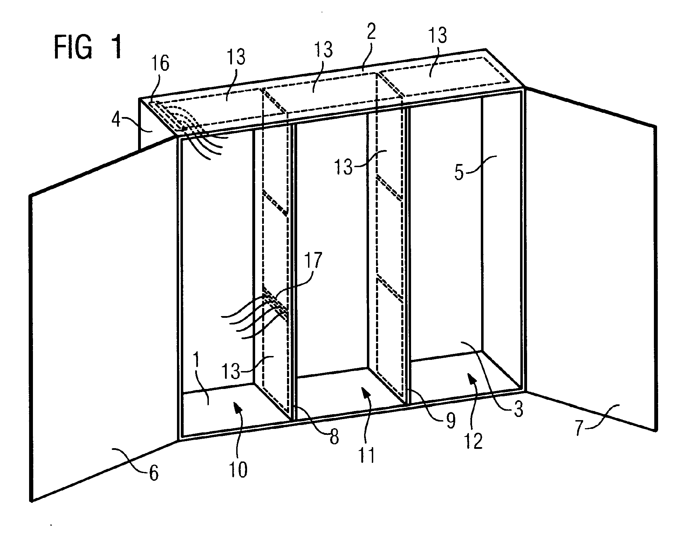

In FIG 1 ist ein Verteilerschrank dargestellt, der eine untere Wand 1, eine obere Wand 2, eine Rückwand 3 und zwei Seitenwände 4 und 5 besitzt. Der Verteilerschrank ist mit zwei Türen 6, 7 verschließbar. Im Inneren des Verteilerschranks befinden sich zwei vertikal angeordnete Feldtrennwände 8 und 9, die den Innenraum des Verteilerschranks in drei Verteilerfelder 10, 11 und 12 teilen. Typischerweise ist das linke Feld 10 ein Zählerfeld, in dem unter anderem ein Stromzähler installiert ist. Die beiden übrigen Felder 11, 12 können beispielsweise Leitungsschutzschalter, Fehlerstromschutzschalter und andere Installationsgeräte aufnehmen. Diese sind gegebenenfalls an horizontal verlaufenden Hutschienen befestigt.

In dem Beispiel von FIG 1 erfolgt die Stromverteilung in dem gesamten Verteilerschrank und insbesondere die Zuleitung zwischen dem Zählerfeld und den auf den Hutschienen aufgebauten Geräten durch Sammelschienen. Diese sind wiederum durch Sammelschienenmodule 13 aufgebaut. In der oberen Wand 2 des Verteilerschranks sind drei Sammelschienenmodule 13 in Reihe zusammengesteckt und bilden so eine horizontal verlaufende Sammelschiene. Ebenso sind in die Feldtrennwände 8 und 9 jeweils drei linear hintereinander zusammengesteckte Sammelschienenmodule 13 integriert, so dass sich vertikal verlaufende Sammelschienen ergeben. Die beiden vertikalen Sammelschienen sind mit der horizontal verlaufenden Sammelschiene verbunden.

Prinzipiell können die Sammelschienenmodule 13 beliebig in dem Verteilerschrank angeordnet sein. Insbesondere können sie auch an den Wänden des Verteilerschranks befestigt sein. In dem speziellen Beispiel von FIG 1 sind sie jedoch in die Feldabschottungen bzw. Feldtrennwände 8, 9 sowie die obere Wand 2 integriert. Gegebenenfalls können die Sammelschienenmodule 13 auch die jeweiligen Wände ersetzen, d. h. selbst eine Wand bilden. Auf diese Weise lässt sich der Raum in einem Verteilerschrank besser ausnutzen und es steht mehr Verlege- und Verdrahtungsraum für die Leitungen in den einzelnen Feldern zur Verfügung. Außerdem stellt sich der gesamte Verteiler wesentlich übersichtlicher dar.

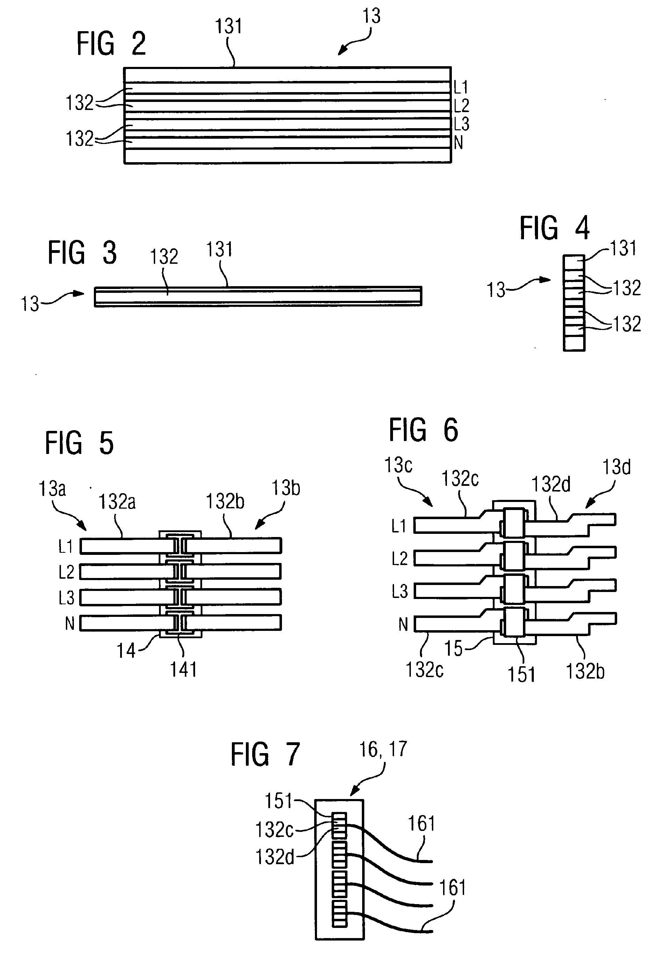

In FIG 2 ist ein Sammelschienenmodul 13 in der Draufsicht dargestellt. FIG 3 zeigt die entsprechende Längsseitenansicht und FIG 4 die Stirnseitenansicht des Sammelschienenmoduls 13. Es besteht aus einem Grundkörper 131, der als plattenförmiger Quader ausgebildet ist. In den Grundkörper 131 sind hier vier parallel verlaufende Einzelschienen 132 für die Phasen L1, L2, L3 und den Nulleiter N integriert.

Die Länge eines Sammelschienenmoduls 13 ist vorzugsweise so gewählt, dass sie der Breite eines Verteilerfelds 10, 11, 12 entspricht. Diese ist gegebenenfalls genormt. Wie aus den Figuren 3 und 4 ersichtlich ist, ist das Sammelschienenmodul 13 sehr schmal, so dass es, wie erwähnt, in die entsprechenden Wände integriert wird bzw. diese selbst darstellen kann. Die Breite eines Sammelschienenmoduls 13 ist vorzugsweise auf die Tiefe eines Verteilerschranks begrenzt. Die Dimensionen eines Sammelschienenmoduls 13 können aber grundsätzlich beliebig gewählt werden. So kann die Länge eines Sammelschienenmoduls 13 beispielsweise einer vorgegebenen Höhe eines Feldmoduls entsprechen. Derart vorkonfektionierte Sammelschienenmodule können einem Verteilerschrank als Zubehör beigefügt sein. Natürlich besteht auch die Möglichkeit, Sammelschienenmodule 13 in gewünschter Weise abzulängen.

An den Anfangs- bzw. Endpunkten jedes Sammelschienenmoduls stellt ein einfacher, steckbarer Adapter beispielsweise mit Federelementen den Stromübergang zu einem nächsten Sammelschienenmodul sicher. Ein derartiger Adapter 14 ist in FIG 5 dargestellt. In dem vorliegenden Beispiels verbinden vier doppel-T-förmige Federelemente 141 jeweils zwei Einzelschienen 132a und 132b zweier Sammelschienenmodule 13a, 13b.

FIG 6 zeigt eine alternative Ausführungsform eines Adapters 15 zur Verbindung zweier Sammelschienenmodule 13c, 13d. Die jeweiligen Einzelschienen 132c und 132d sind hier abgekröpft und werden mit Klammern 151 paarweise zusammengehalten.

Der Übersicht halber sind in FIG 1 die Adapter bzw. Verbindungsmodule zwischen den Sammelschienenmodulen 13 nicht eingezeichnet. Sie befinden sich aber zwischen den Stirnseiten jeweils zweier Sammelschienenmodule 13. Auch die Verbindung der waagerechten Schiene mit den senkrechten Schienen erfolgt über diese Adapter 14, 15. Hierzu wird ein Adapter 14, 15 entsprechend an eine Seite eines horizontal verlaufenden Sammelschienenmoduls 13 und an die Stirnseite eines vertikal angeordneten Sammelschienenmoduls angesteckt.

Die Einspeisung der Phasen in das Schienensystem kann gemäß FIG 1 über ein Einspeisemodul 16 erfolgen. Das Auskoppeln des Stroms von einer Sammelschiene erfolgt hier durch ein Auskoppelmodul 17. Beide Module 16, 17 können prinzipiell gleich bzw. ähnlich gestaltet sein und die in FIG 7 dargestellte Form besitzen. In dem Beispiel von FIG 7 besitzt das Koppelmodul 16, 17 gleichzeitig die Funktionalität eines Adapters 15. Es verbindet nämlich durch Klammern 151 jeweils zwei Einzelschienen 132c, 132d zweier Sammelschienenmodule, wie dies in dem Beispiel von FIG 6 in der Draufsicht dargestellt ist.
FIG 7 stellt hingegen den Blick entlang der Einzelschienen dar. Von jeder Klammer 151 ist eine flexible Leitung 161 abgeführt. Sie dienen entweder zum Ein- oder Auskoppeln des Stroms in/aus dem Schienensystem.

Durch die Verwendung der Sammelschienenmodule ergeben sich auch hinsichtlich der Kurzschlussfestigkeit wesentliche Vorteile. Insbesondere wird die Wahrscheinlichkeit der mechanischen Beschädigung der Leitungen bei der Installation erheblich reduziert.

## Patentansprüche

1. Installationsverteiler mit
- mindestens einem Installationsgerät und
- einer Sammelschiene zum Übertragen von elektrischer Energie zu dem Installationsgerät, **wobei**
- die Sammelschiene aus mehreren jeweils mindestens zwei parallele Einzelschienen (132) aufweisenden Schienenmodulen (13) aufgebaut ist, die mit Hilfe eines oder mehrerer Verbindungsmodule (14, 15) zusammengesteckt sind,
**dadurch gekennzeichnet, dass**
- **der Installationsverteiler als Schrank mit mehreren Wänden (1 bis 5, 8, 9) ausgebildet ist, wobei mindestens eines der mehreren Schienenmodule (13) in eine der Wände integriert ist.**

2. Installationsverteilter nach Anspruch 1, wobei jedes Schienenmodul (13) plattenförmig ausgebildet ist.

3. Installationsverteiler nach Anspruch 1 oder 2, wobei jedes Schienenmodul (13) je eine Einzelschiene (132) für mindestens zwei der Phasen L1, L2, L3 und N aufweist.

4. Installationsverteiler nach einem der vorhergehenden Ansprüche, wobei jedes Schienenmodul (13) eine Einzelschiene für einen Schutzleiter PE aufweist.

5. Installationsverteiler nach **einem der vorhergehenden Ansprüche**, wobei die Wand, in die ein Schienenmodul integriert ist, eine Trennwand (8, 9) zwischen zwei Verteilerfeldern (10, 11, 12) des Installationsverteilers ist.

6. Installationsverteiler nach einem der vorhergehenden Ansprüche, wobei das/die Verbindungsmodule je eine flexible Leitung (161) für jede Schiene (132) eines Schienenmoduls (13) besitzen.

7. Installationsverteiler nach einem der vorhergehenden Ansprüche, der horizontal nebeneinander mehrere gleich breite Verteilerfelder (10, 11, 12) besitzt, wobei die Schienenmodule jeweils eine Länge aufweisen, die der Breite eines Verteilerfelds entspricht.

## Claims

1. Installation distributor having
- at least one installation device, and
- a busbar for transmitting electrical energy to the installation device, wherein
- the busbar is composed of a plurality of busbar modules (13), each having at least two parallel single buses (132), which are connected together with the aid of one or more connection modules (14, 15),
**characterised in that**
- the installation distributor is embodied as a cabinet with a plurality of walls (1 to 5, 8, 9), wherein at least one of the plurality of busbar modules (13) is integrated into one of the walls.

2. Installation distributor according to claim 1, wherein each busbar module (13) is plate-shaped.

3. Installation distributor according to claim 1 or 2, wherein each busbar module (13) has a single bus (132) for at least two of the phases L1, L2, L3 and N.

4. Installation distributor according to one of the preceding claims, wherein each busbar module (13) has a single bus for a protective earth conductor PE.

5. Installation distributor according to one of the preceding claims, wherein the wall into which one busbar module is integrated is a partition wall (8, 9) between two distribution board panels (10, 11, 12) of the installation distributor.

6. Installation distributor according to one of the preceding claims, wherein the connecting module(s) each have a flexible line (161) for each bus (132) of a busbar module (13).

7. Installation distributor according to one of the preceding claims, which possesses a plurality of equal-width distribution board panels (10, 11, 12) horizontally adjacent to one another, wherein the busbar modules each have a length corresponding to the width of a distribution board panel.

## Revendications

1. Distributeur d'installation avec :
- au moins un appareil d'installation et
- un rail collecteur pour transmettre de l'énergie électrique à l'appareil d'installation,
- le rail collecteur étant réalisé à partir de plusieurs modules de rails (13) qui comportent respectivement au moins deux rails uniques parallèles (132) et sont emboîtés les uns dans les autres à l'aide d'un ou de plusieurs modules de liaison (14, 15),
**caractérisé en ce que**
- le distributeur d'installation se présente sous la forme d'une armoire avec plusieurs parois (1 à 5, 8, 9), au moins l'un des plusieurs modules de rails (13) étant intégré dans l'une des parois.

2. Distributeur d'installation selon la revendication 1, chaque module de rails (13) étant réalisé sous la forme d'une plaque.

3. Distributeur d'installation selon la revendication 1 ou 2, chaque module de rails (13) comportant respectivement un rail unique (132) pour au moins deux des phases L1, L2, L3 et N.

4. Distributeur d'installation selon l'une des revendications précédentes, chaque module de rails (13) comportant un rail unique pour un conducteur de protection PE.

5. Distributeur d'installation selon l'une des revendications précédentes, la paroi dans laquelle un module de rails est intégré étant une cloison (8, 9) entre deux panneaux de distribution (10, 11, 12) du distributeur d'installation.

6. Distributeur d'installation selon l'une des revendications précédentes, le/les module(s) de liaison possédant respectivement une conduite flexible (161) pour chaque rail (132) d'un module de rails (13).

7. Distributeur d'installation selon l'une des revendications précédentes, possédant plusieurs panneaux de distribution (10, 11, 12) de même largeur situés côte à côte horizontalement, les modules de rails présentant respectivement une longueur qui correspond à la largeur d'un panneau.
